# EUROPEAN PATENT SPECIFICATION

(11) **EP 3 381 273 B1**
(45) Date of publication and mention of the grant of the patent: **08.01.2020**
(21) Application number: 18165062.3
(22) Date of filing: 29.03.2018
(51) Int. Cl.: A01K 11/00

(54) **DETERMINATION OF LIFE OF ANIMAL MANAGEMENT TAGS**
BESTIMMUNG DER LEBENSDAUER VON TIERMANAGEMENT-TAGS
DÉTERMINATION DE DURÉE DE VIE D'ÉTIQUETTES DE GESTION D'ANIMAUX

(30) Priority: 29.03.2017 NL 2018597
(43) Date of publication of application: 03.10.2018
(73) Proprietor: Nedap N.V., 7141 DC Groenlo (NL)
(72) Inventor: Lammers, Rudie Jan Hendrik, 7141 DC Groenlo (NL); van Dijk, Jeroen Martin, 7141 DC Groenlo (NL)
(74) Representative: V.O.

(56) References cited:
- US-A1- 2007 103 296
- US-A1- 2012 092 132

## Description

The invention relates to an animal management tag according to the preamble of claim 1.Such a tag is known per se, for example in US2012/092132A1 and US2007/103296A1.

Such animal management tags are widely used at the modern farm nowadays. At a farm with cows, most of these animals wear a tag to enable livestock monitoring and management. For the farm to function properly, it has become wholly dependent on the tags.

It is therefore important that the remaining life of the energy source of such a tag can be estimated so that the tag or the energy source of the tag can be replaced in good time before the tag concerned stops functioning. In the world of animal management tags it is known, to this end, to provide the tag with a voltmeter which measures the voltage of the energy source. The idea is that this voltage is a measure of the remaining life of the energy source. A problem, however, is that the voltage which an energy source, such as a lithium battery, delivers also depends strongly on its ambient temperature. For an application at room temperature, this is acceptable. The ambient temperature of an animal management tag, however, varies strongly. For instance, it makes a big difference whether the animal is indoors or outdoors and/or whether it is summer or winter. This renders determination of the life of the energy source unreliable. The object of the invention is to provide a solution for this in the field of animal management tags.

The animal management tag according to the invention is characterized in that it further is configured to measure the magnitude of the current which is delivered by the energy source and integrate it over time to determine the parameter. By determining how many electrons have already been delivered by the energy source, the remaining life can be estimated well. This is because, of every energy source, such as a lithium battery, it has been (accurately) established how many electrons it can deliver during its complete life. Measuring the magnitude of the current and integrating the magnitude of the current over time corresponds to determining the amount of electrons that have been delivered by the energy source. Measurement of the magnitude of the current and integration over time thereof can be carried out in a manner known per se with known means.

In particular, it holds that the tag is configured to transmit information about the value of a parameter with the transmitting device. This information can then be received so that it can be estimated what the remaining life of the tag is.

In particular, it holds that the tag is configured to record information about the course of the parameter over time. The tag may then be furthermore configured to transmit information about the course of the parameter over time with the transmitting device. Also when this information is received, on the basis thereof an estimate can be made of what the remaining life is of the energy source. The course of the parameter over time can in fact also comprise information about the age of the tag. After all, it can make a difference whether information shows that in a relatively short time many electrons were delivered by the energy source or that spread over a long period of time, such as, for example, a few years, the same amount of electrons were delivered. In the latter case, ageing of the energy source is also going to play a part in determining the remaining life.

In particular, it holds that the tag is configured to transmit an alert signal with the transmitting device when the parameter exceeds a predetermined value. This alert signal may be delivered, for instance, when the end of the life of the energy source comes in sight so that the energy source can be replaced in due time or the tag as a whole can be replaced.

According to a practical embodiment, in use, the processor will supply information about the value of the parameter to the transmitting device for transmitting information about the value of the parameter. Also, according to a practical embodiment, the processor, in use, will record the information about the course of the value of the parameter over time. Furthermore, in a practical embodiment, the processor, in use, will determine whether the parameter has exceeded the predetermined value. In other words, the calculations mentioned can be carried out by the processor.

It is also possible, however, that with the aid of the processor, the value of the parameter is supplied to the transmitting device, with a further analysis of the parameter in respect of the useful life being carried out by a central computer which receives information about the value of the parameter as transmitted by the transmitting device. Thus, the central computer may be configured to generate an alert signal when the received parameter exceeds a predetermined value. Also, the computer may be configured to record and analyze information about the course of the parameter over time.

The invention will now be further elucidated on the basis of the drawing. In the drawing:
Figure 1 shows a system comprising at least one animal management tag; and
Figure 2 shows the animal management tag of Figure 1.

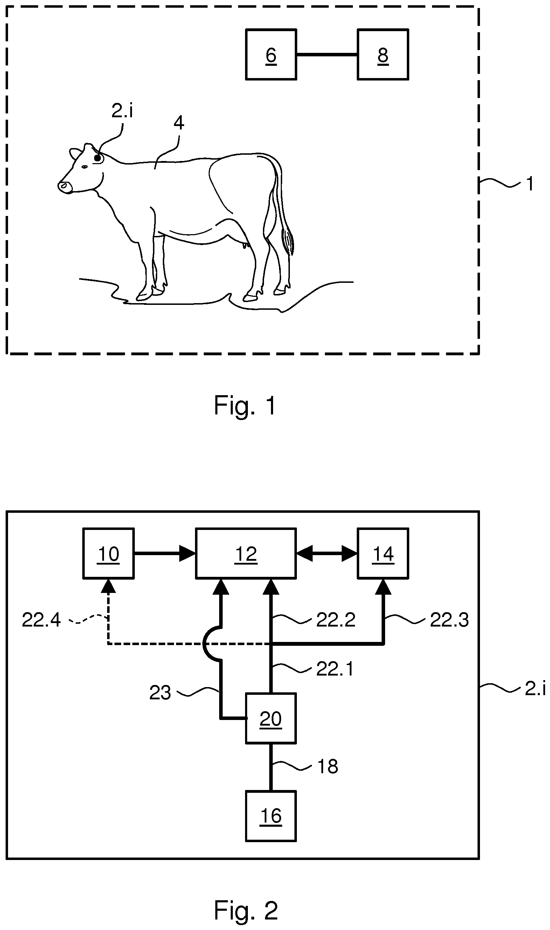

The system 1 of Figure 1 comprises at least one animal management tag, or label, 2.i (i=1, 2, 3, ... n) which is worn by an animal, in this example a cow 4. The system further comprises a receiver 6 which is communicatively connected with a central computer 8.

The tag 2.i (in this example, only a tag 2.1 is shown) is provided with at least one sensor 10 for performing a measurement on the animal 4. The sensor 10 may be implemented, for example, as a G-sensor, a temperature sensor, and the like. Obviously, the tag may also be provided with a plurality of such sensors. The sensor 10 is communicatively connected with a processor 12.

The tag is furthermore provided with a transmitting and receiving device 14 which is communicatively connected with the processor 12. Further, the tag is provided with an energy source 16 which in this example is implemented as a lithium battery. The energy source 16 supplies electrical energy via a line 18 to a current meter 20. The electrical energy is furthermore supplied via a line 22.1 and line 22.2 to the processor 12. Furthermore, via the line 18, 22.1 and a line 22.3 energy is supplied to the transmitting and receiving device 14. The sensor 10 in this example also requires energy for its operation and it is provided with electrical energy via line 18, 22.1 and a line 22.4. In the case where the sensor 10 is a passive sensor, such as, for example, a temperature sensor, the line 22.4 can be omitted. The current meter 20 in this example is connected in series with the lines 18 and 22.1 and itself consumes hardly any or no energy for performing a measurement of the magnitude of the current flowing through the line 18 and the line 22.1. Via an information line 23, the current meter 20 indicates what the instantaneous magnitude of the current is that is being passed through the lines 18 and 22.1. The processor 12 receives information about the measured magnitude of the current and is configured to integrate it over time. Thus, by the processor 12 a parameter is determined that is a measure of the number of electrons that has been delivered by the energy source.

In use, therefore, from the energy source 16 electrical energy will be supplied to the sensor 10, the processor 12 and the transmitting and receiving device 14. This energy is supplied via the lines 18, 22.1-22.4 to the respective components 10, 12, 14. The sensor 10 uses this energy, in this example, to measure movements of the animal. The information thereof is supplied to the processor 12 which further analyzes these movements and possibly stores information about this. At set times, this information is supplied by the processor 12 to the transmitting and receiving device 14 which transmits this information. This information is received with the aid of the receiver 6 and supplied to the central computer 8 for further processing.

What is involved here is in itself a general application of animal management tags. In this example, however, it holds that, furthermore, with the aid of the processor 12 the number of electrons is determined that has been delivered by the energy source 16. All this is realized by measuring the magnitude of the current with the aid of the current meter, whereby information about the magnitude of the current is supplied via the line 23 to the processor 12. In this example, the processor 12 integrates the magnitude of the current over time. The tag is hence provided with a current integrator for obtaining a parameter which is a measure of the number of electrons delivered by the energy source 16. In this example, the processor comprises the current integrator.

In this example, the processor supplies information about the value of the parameter to the transmitting and receiving device 14 for transmitting information about the value of the parameter. This information is received with the aid of the receiver 6 and supplied to the central computer 8 for further processing. The central computer in this example is configured to determine the life of the energy source 16 on the basis of this information. This can be done in that it has been predetermined how many electrons the energy source 16 can (at any rate just about) (at the least) deliver before it is empty. Obviously, this is about an estimate. This number can be estimated beforehand on the safe side, so that it is in any case practically certain that this number of electrons can in actual fact be delivered. Also, an estimate may be made with a predetermined confidence interval. By determining how many electrons the energy source has already delivered, it can be determined whether the energy source, within predetermined margins, is at the end of its life. If the end of life is in sight, the central computer may, for example, generate an alert signal. According to a practical embodiment, it holds that the central computer is configured to generate an alert signal when the received parameter exceeds a predetermined value. In that regard, for instance, the predetermined value may be chosen such that statistically with a predetermined probability at the least a number of electrons can be delivered by the energy source that corresponds to the predetermined value. In particular, the predetermined value is lowered over time to allow for an ageing of the energy source.

It is also possible, however, that the processor 12 itself performs such calculations. Thus, it is possible that the processor, in use, records the information about the course of the values of the parameter over time.

Also, it is possible that the processor, in use, determines whether the parameter has exceeded a predetermined value.

Also, it is possible that the tag is configured to transmit an alert signal with the transmitting device when the parameter exceeds a predetermined value. This alert signal can then be generated by the processor 12 and supplied to the transmitting and receiving device 14 in order to be transmitted. The alert signal can then be received with the aid of the receiver 6 whereupon the computer 8 draws a user's attention to the fact that such an alert signal has been generated so that the necessary measures can be taken, such as, for example, replacing the animal management tag on the animal 4 by a new animal management tag or replacing the energy source 16 of the animal management tag 2.1. The above-mentioned predetermined value in relation to the processor may for instance be chosen such that statistically with a predetermined probability at the least a number of electrons can be delivered by the energy source that corresponds to the predetermined value. In particular, the predetermined value is lowered over time to allow for an ageing of the energy source.

It is noted that the transmitting and receiving device 14 in this example is of a type that transmits electromagnetic signals. The receiver 6 is then configured to receive such electromagnetic signals.

As mentioned above, both the computer and the processor can generate a signal when the parameter exceeds a predetermined value. This predetermined value can be a fixed value. It is also possible, however, that the computer or the processor arranges for this predetermined value to decrease over time so that the older the tag gets, the sooner an alert signal will be sent out so that measures can be taken for the purpose of replacement.

It is further noted that the receiver 6 may also be implemented as a transmitter-receiver unit so that it is also possible, for example, to supply information from the central computer 8 to the animal management tag 2.i, for example to reprogram the processor 12, set the sensor 10, etc. If the tag does not need to be able to receive information, the device 14 may be just a transmitting device.

In this example, the system comprises a single animal management tag 2.i (i=1). In this regard, in the processor 12, an identification code of the tag concerned is stored. This identification code may be transmitted together with information that is supplied by the processor to the transmitting and receiving device 14 in order to be transmitted, with the respective identification code, so that upon receipt it is clear from what animal management tag the information concerned originates. In particular, the system comprises a plurality of such information tags 2.i (i=1,2, ...,n).

In this example, the animal management tag is implemented as an ear stud. It is also possible, however, that the animal management tag is a different type of animal management tag, which, for example, is attached to a collar, a leg band, or tail band. Also, the animal management tag may be implemented as a bolus which, in use, is in a stomach of the animal 4. Such variants are each understood to be within the scope of the invention.

## Claims

1. An animal management tag (2.1), such as an ear stud, configured to be worn by an animal (4), the tag comprising at least one sensor (10) for performing a measurement on the animal (4), a processor (12) connected with the sensor (10) at least for processing measuring results which have been obtained with the aid of the at least one sensor (10), and a transmitting device (14) connected with the processor (12) for transmitting information generated by the processor (12), the tag further comprising an energy source (16) such as a lithium battery for supplying electrical energy to electrical components of the tag such as the processor (12), the transmitting device (14) and possibly the sensor (10) for the operation of the electrical components, wherein the management tag is further configured to determine a parameter which is a measure of the number of electrons that has been delivered by the energy source (16), **characterized in that** the tag is configured to measure the magnitude of the current which is delivered by the energy source (16) and integrate it over time to determine the parameter.

2. The animal management tag according to claim 1, **characterized in that** the tag is configured to transmit information about the value of the parameter with the transmitting device (14).

3. The animal management tag according to any one of the preceding claims, **characterized in that** the tag is configured to record information about the course of the parameter over time.

4. The animal management tag according to any one of the preceding claims, **characterized in that** the tag is configured to transmit information about the course of the parameter over time with the transmitting device (14).

5. The animal management tag according to any one of the preceding claims, **characterized in that** the tag is configured to transmit an alert signal with the transmitting unit when the parameter exceeds a predetermined value.

6. The animal management tag according to any one of the preceding claims, **characterized in that** the tag is provided with a current integrator for obtaining the parameter.

7. The animal management tag according to claim 6, **characterized in that** the processor (12) comprises the current integrator.

8. The animal management tag according to at least claim 2, **characterized in that** the processor (12), in use, supplies information about the value of the parameter to the transmitting unit for transmitting information about the value of the parameter.

9. The animal management tag according to at least claim 3, **characterized in that** the processor (12), in use, records the information about the course of the value of the parameter over time.

10. The animal management tag according to at least claim 5, **characterized in that** the processor (12), in use, determines whether the parameter has exceeded the predetermined value.

11. The animal management tag according to any one of the preceding claims, **characterized in that** the tag is furthermore provided with a receiving device (14) which is connected with the processor (12), for receiving a signal and supplying information about the received signal to the processor (12).

12. The animal management tag according to claim 11, **characterized in that** the receiving device (14) is configured to receive an electromagnetic signal.

13. The animal management tag according to any one of the preceding claims, **characterized in that** the transmitting device (14) is configured to transmit an electromagnetic signal.

14. A system comprising at least one animal management tag according to at least claim 2, a receiver (6) and a central computer (8), wherein the receiver (6) is configured to receive the information about the parameter transmitted with the transmitting device (14) and the central computer (8) is configured to process the information about the parameter received with the receiver (6).

15. The system according to claim 14, **characterized in that** the central computer (8) is configured to generate an alert signal when the received parameter exceeds a predetermined value.

16. The system according to claim 14 or 15, **characterized in that** the central computer (8) is configured to record information about the course of the parameter over time.

17. A method for using a tag according to one of the preceding claims 5 or 10, **characterized in that** the predetermined value is chosen such that statistically with a predetermined probability at the least a number of electrons can be delivered by the energy source (16) that corresponds to the predetermined value.

18. A method for using a system according to claims 15 or 16 in its dependency on claim 15, **characterized in that** the predetermined value is chosen such that statistically with a predetermined probability at the least a number of electrons can be delivered by the energy source (16) that corresponds to the predetermined value.

19. The method according to claim 17 or 18, **characterized in that** the predetermined value is lowered over time.

## Patentansprüche

1. Tiermanagementetikett (2.1), wie beispielsweise ein Ohrstecker, das konfiguriert ist, um von einem Tier (4) getragen zu werden, wobei das Etikett wenigstens einen Sensor (10) zum Durchführen einer Messung an dem Tier (4), einen Prozessor (12), der mit dem Sensor (10) wenigstens zur Verarbeitung von Messergebnissen verbunden ist, die mit Hilfe des wenigstens einen Sensors (10) erhalten wurden, und eine mit dem Prozessor (12) verbundene Sendevorrichtung (14) zum Senden von durch den Prozessor (12) erzeugten Informationen umfasst, wobei das Etikett ferner eine Energiequelle (16) wie eine Lithiumbatterie zum Liefern elektrischer Energie an elektrische Komponenten des Etiketts wie den Prozessor (12), die Sendevorrichtung (14) und möglicherweise den Sensor (10) für den Betrieb der elektrischen Komponenten umfasst, wobei das Managementetikett ferner dazu konfiguriert ist, einen Parameter zu bestimmen, der ein Maß für die Anzahl von Elektronen ist, die von der Energiequelle (16) abgegeben wurde, **dadurch gekennzeichnet, dass** das Etikett dazu konfiguriert ist, die Größe des Stroms zu Messen, die von der Energiequelle (16) abgegeben wird, und diese über die Zeit zu integrieren, um den Parameter zu bestimmen.

2. Tiermanagementetikett nach Anspruch 1, **dadurch gekennzeichnet, dass** das Etikett dazu konfiguriert ist, Informationen über den Wert des Parameters mit der Sendevorrichtung (14) zu senden.

3. Tiermanagementetikett nach einem der vorhergehenden Ansprüche, **dadurch gekennzeichnet, dass** das Etikett dazu konfiguriert ist, Informationen über den Verlauf des Parameters über die Zeit aufzuzeichnen.

4. Tiermanagementetikett nach einem der vorhergehenden Ansprüche, **dadurch gekennzeichnet, dass** das Etikett dazu konfiguriert ist, Informationen über den Verlauf des Parameters über die Zeit mit der Sendevorrichtung (14) zu senden.

5. Tiermanagementetikett nach einem der vorhergehenden Ansprüche, **dadurch gekennzeichnet, dass** das Etikett dazu konfiguriert ist, ein Warnsignal mit der Sendeeinheit zu senden, wenn der Parameter einen vorbestimmten Wert überschreitet.

6. Tiermanagementetikett nach einem der vorhergehenden Ansprüche, **dadurch gekennzeichnet, dass** das Etikett mit einem Stromintegrator zum Erhalten des Parameters versehen ist.

7. Tiermanagementetikett nach Anspruch 6, **dadurch gekennzeichnet, dass** der Prozessor (12) den Stromintegrator umfasst.

8. Tiermanagementetikett nach wenigstens Anspruch 2, **dadurch gekennzeichnet, dass** der Prozessor (12) im Gebrauch Informationen über den Wert des Parameters an die Sendeeinheit liefert, um Informationen über den Wert des Parameters zu senden.

9. Tiermanagementetikett nach wenigstens Anspruch 3, **dadurch gekennzeichnet, dass** der Prozessor (12) im Gebrauch die Information über den Verlauf des Wertes des Parameters über die Zeit aufzeichnet.

10. Tiermanagementetikett nach wenigstens Anspruch 5, **dadurch gekennzeichnet, dass** der Prozessor (12) im Gebrauch bestimmt, ob der Parameter den vorbestimmten Wert überschritten hat.

11. Tiermanagementetikett nach einem der vorhergehenden Ansprüche, **dadurch gekennzeichnet, dass** das Etikett ferner mit einer Empfangsvorrichtung (14) versehen ist, die mit dem Prozessor (12) verbunden ist, um ein Signal zu empfangen und Informationen über das empfangene Signal an den Prozessor (12) zu liefern.

12. Tiermanagementetikett nach Anspruch 11, **dadurch gekennzeichnet, dass** die Empfangsvorrichtung (14) dazu konfiguriert ist, ein elektromagnetisches Signal zu empfangen.

13. Tiermanagementetikett nach einem der vorhergehenden Ansprüche, **dadurch gekennzeichnet, dass** die Sendevorrichtung (14) dazu konfiguriert ist, ein elektromagnetisches Signal zu senden.

14. System, umfassend wenigstens ein Tiermanagementetikett nach wenigstens Anspruch 2, einen Empfänger (6) und einen Zentralrechner (8), wobei der Empfänger (6) dazu konfiguriert ist, die Informationen über den mit der Sendevorrichtung (14) gesendeten Parameter zu empfangen und der Zentralrechner (8) dazu konfiguriert ist, die Informationen über den mit dem Empfänger (6) empfangenen Parameter zu verarbeiten.

15. System nach Anspruch 14, **dadurch gekennzeichnet, dass** der Zentralrechner (8) dazu konfiguriert ist, ein Warnsignal zu erzeugen, wenn der empfangene Parameter einen vorbestimmten Wert überschreitet.

16. System nach Anspruch 14 oder 15, **dadurch gekennzeichnet, dass** der Zentralrechner (8) dazu konfiguriert ist, Informationen über den Verlauf des Parameters über die Zeit aufzuzeichnen.

17. Verfahren zur Verwendung eines Etiketts nach einem der vorhergehenden Ansprüche 5 oder 10, **dadurch gekennzeichnet, dass** der vorbestimmte Wert derart gewählt wird, dass statistisch mit einer vorbestimmten Wahrscheinlichkeit wenigstens eine Anzahl von Elektronen von der Energiequelle (16) abgegeben werden kann, die dem vorbestimmten Wert entspricht.

18. Verfahren zur Verwendung eines Systems nach Anspruch 15 oder 16 in Abhängigkeit von Anspruch 15, **dadurch gekennzeichnet, dass** der vorbestimmte Wert derart gewählt wird, dass statistisch mit einer vorbestimmten Wahrscheinlichkeit wenigstens eine Anzahl von Elektronen von der Energiequelle (16) abgegeben werden kann, die dem vorbestimmten Wert entspricht.

19. Verfahren nach Anspruch 17 oder 18, **dadurch gekennzeichnet, dass** der vorbestimmte Wert über die Zeit abgesenkt wird.

## Revendications

1. Une étiquette de gestion d'animaux (2.1), telle qu'un bouton d'oreille, configurée pour être portée par un animal (4), l'étiquette comprenant au moins un capteur (10) pour effectuer une mesure sur l'animal (4), un processeur (12) connecté au capteur (10) pour au moins traiter des résultats de mesure obtenus à l'aide dudit au moins capteur (10), et un dispositif d'émission (14) connecté au processeur (12) pour la transmission d'informations générées par le processeur (12), l'étiquette comprenant en outre une source d'énergie (16) telle qu'une batterie au lithium pour fournir de l'énergie électrique à des composants électriques de l'étiquette, tels que le processeur (12), le dispositif d'émission (14) et éventuellement le capteur (10) pour le fonctionnement des composants électriques, dans lequel l'étiquette de gestion est en outre configurée pour déterminer un paramètre qui est une mesure du nombre d'électrons qui ont été délivrés par la source d'énergie (16), **caractérisé en ce que** l'étiquette est configurée pour mesurer la magnitude du courant qui est délivré par la source d'énergie (16) et l'intégrer dans le temps pour déterminer le paramètre.

2. L'étiquette de gestion d'animaux selon la revendication 1, **caractérisée en ce que** l'étiquette est configurée pour transmettre des informations relatives à la valeur du paramètre par le dispositif d'émission (14).

3. L'étiquette de gestion d'animaux selon l'une quelconque des revendications précédentes, **caractérisée en ce que** l'étiquette est configurée pour enregistrer des informations sur l'évolution du paramètre dans le temps.

4. L'étiquette de gestion d'animaux selon l'une quelconque des revendications précédentes, **caractérisée en ce que** l'étiquette est configurée pour transmettre des informations sur l'évolution du paramètre dans le temps par le dispositif d'émission (14).

5. L'étiquette de gestion d'animaux selon l'une quelconque des revendications précédentes, **caractérisée en ce que** l'étiquette est configurée pour transmettre un signal d'alerte par l'unité d'émission lorsque le paramètre dépasse une valeur prédéterminée.

6. L'étiquette de gestion d'animaux selon l'une quelconque des revendications précédentes, **caractérisée en ce que** l'étiquette est munie d'un intégrateur de courant pour obtenir le paramètre.

7. L'étiquette de gestion d'animaux selon la revendication 6, **caractérisée en ce que** le processeur (12) comprend l'intégrateur de courant.

8. L'étiquette de gestion d'animaux selon au moins la revendication 2, **caractérisée en ce que** le processeur (12), en cours d'utilisation, fournit des informations sur la valeur du paramètre à l'unité de transmission pour transmettre des informations sur la valeur du paramètre.

9. L'étiquette de gestion d'animaux selon au moins la revendication 3, **caractérisée en ce que** le processeur (12), en cours d'utilisation, enregistre l'information sur l'évolution de la valeur du paramètre dans le temps.

10. L'étiquette de gestion d'animaux selon au moins la revendication 5, **caractérisée en ce que** le processeur (12), en cours d'utilisation, détermine si le paramètre a dépassé la valeur prédéterminée.

11. L'étiquette de gestion d'animaux selon l'une quelconque des revendications précédentes, **caractérisée en ce que** l'étiquette est en outre pourvue d'un dispositif de réception (14) qui est connecté au processeur (12) pour recevoir un signal et fournir des informations sur les informations reçues au processeur (12).

12. L'étiquette de gestion d'animaux selon la revendication 11, **caractérisée en ce que** le dispositif de réception (14) est configuré pour recevoir un signal électromagnétique.

13. L'étiquette de gestion d'animaux selon l'une quelconque des revendications précédentes, **caractérisée en ce que** le dispositif d'émission (14) est configuré pour transmettre un signal électromagnétique.

14. Un système comprenant au moins une étiquette de gestion d'animaux selon au moins la revendication 2, un récepteur (6) et un ordinateur central (8), dans lequel le récepteur (6) est configuré pour recevoir les informations concernant le paramètre transmis par le dispositif d'émission (14) et l'ordinateur central (8) est configuré pour traiter les informations concernant le paramètre reçu par le récepteur (6).

15. Le système selon la revendication 14, **caractérisé en ce que** l'ordinateur central (8) est configuré pour générer un signal d'alerte lorsque le paramètre reçu dépasse une valeur prédéterminée.

16. Le système selon la revendication 14 ou 15, **caractérisé en ce que** l'ordinateur central (8) est configuré pour enregistrer des informations sur l'évolution du paramètre dans le temps.

17. Un procédé d'utilisation d'une étiquette selon l'une des revendications précédentes 5 ou 10, **caractérisé en ce que** la valeur prédéterminée est choisie de telle sorte que, statistiquement, avec une probabilité prédéterminée, au moins un nombre d'électrons pouvant être délivré par la source d'énergie (16) correspondant à la valeur prédéterminée.

18. Un procédé d'utilisation d'un système selon les revendications 15 ou 16 dans sa dépendance avec la revendication 15, **caractérisé en ce que** la valeur prédéterminée est choisie de telle sorte que statistiquement avec une probabilité prédéterminée au moins un nombre d'électrons puisse être délivré par la source d'énergie (16) correspondant à la valeur prédéterminée.

19. Un procédé selon la revendication 17 ou 18, **caractérisé en ce que** la valeur prédéterminée est abaissée dans le temps.
